(19) Europäisches Patentamt
European Patent Office
Office européen des brevets

(11) Veröffentlichungsnummer: **0 248 449**
**A1**

(12) **EUROPÄISCHE PATENTANMELDUNG**

(21) Anmeldenummer: 87108203.8

(22) Anmeldetag: 05.06.87

(51) Int. Cl.⁴: **H02M 7/529**

(30) Priorität: 06.06.86 DE 3619038

(43) Veröffentlichungstag der Anmeldung:
09.12.87 Patentblatt 87/50

(84) Benannte Vertragsstaaten:
AT BE CH DE ES FR GB GR IT LI LU NL SE

(71) Anmelder: MSI Technik GmbH
Leinfeld 17
D-8110 Seehausen(DE)

(72) Erfinder: Nistor, Dan, Dipl.-Ing.
Bahnhofsweg 2
D-8110 Hechendorf(DE)

(74) Vertreter: Liska, Horst, Dr. et al
Patentanwälte H. Weickmann, Dr. K. Fincke,
F.A. Weickmann, B. Huber, Dr. H. Liska, Dr. J.
Prechtel Möhlstrasse 22 Postfach 86 08 20
D-8000 München 86(DE)

(54) **Mehrphasen-Wechselrichterschaltung.**

(57) Die Mehrphasen-Wechselrichterschaltung bzw. Mehrphasen-Umrichterschaltung umfaßt einen durch aufeinanderfolgende Steuerimpulse vorbestimmter Dauer steuerbaren Pulswechselrichterkreis für jeden Phasenstrang sowie einen Speicher, in welchem Impulsbreitedaten für eine vorbestimmte Impulsbreitesequenz der Steuerimpulse gespeichert sind. Eine insbesondere als Mikrocontroller ausgebildete Steuerschaltung erzeugt die Steuerimpulse in Form gegeneinander phasenverschobener Impulsfolgen, in welchen die Steuerimpulse mit vorbestimmter Impulsfolgeperiode T aufeinanderfolgen und sich die Impulsbreite ($\tau$) entsprechend der durch die gespeicherten Impulsbreitedaten bestimmten Impulsbreitesequenz ändert und periodisch wiederholt. Der Speicher speichert die Impulsbreitedaten in Form von Datenwörtern ($A_1$ bis $A_n$), die jeweils Informationen über gleichzeitig zur Steuerung der Pulswechselrichterkreise zu erzeugende logische Pegel der Steuerimpulse ($U_1$ bis $U_3$, $\overline{U}_1$ bis $\overline{U}_3$) sämtlicher Phasenstränge enthalten. Die Steuerschaltung liest die Datenwörter aufeinanderfolgend mit einer Wortfolgeperiode ($\Delta T$) die kleiner ist als die vorbestimmte Impulsfolgeperiode (T) aus dem Speicher aus und erzeugt die Steuerimpulse entsprechend den Informationen des jeweils ausgelesenen Datenworts in paralleler Form.

FIG.3

a)
b)
c)
d)
e)
f)
g)
h)
i)
k)
l)
m)
n)

BAD ORIGINAL

## Mehrphasen-Wechselrichterschaltung

Die Erfindung betrifft eine Mehrphasen-Wechselrichterschaltung zur Erzeugung mehrerer gegeneinander phasenverschobener Wechselspannungen aus einer Gleichspannung, insbesondere eine Mehrphasen-Umrichterschaltung, die die Gleichspannung aus einer Primär-Wechselspannung erzeugt, mit einem durch aufeinanderfolgende Steuerimpulse vorbestimmter Dauer steuerbaren Pulswechselrichterkreis für jeden Phasenstrang, mit einem Speicher, in welchem Impulsbreitedaten für eine vorbestimmte Impulsbreitensequenz der Steuerimpulse gespeichert sind und mit einer Steuerschaltung, die die Steuerimpulse in Form gegeneinander phasenverschobener Impulsfolgen erzeugt, in welchen die Steuerimpulse mit vorbestimmter Impulsfolgeperiode aufeinanderfolgen und sich die Impulsbreite entsprechend der durch die gespeicherten Impulsbreitedaten bestimmten Impulsbreitesequenz ändert und periodisch wiederholt.

Herkömmliche Wechselrichterschaltungen und Umrichterschaltungen dieser Art haben einen Tabellenspeicher, in welchem die Impulsbreitedaten zumindest für eine halbe Periode der Wechselspannung eines einzigen der Phasenstränge gespeichert sind. Die Steuerschaltung, die die Impulsbreitedaten mit einer der Impulsfolgeperiode entsprechenden Taktfrequenz ausliest, erzeugt mittels eines steuerbaren Zeitgebers oder Timers für den Pulswechsel-Richterkreis dieses einen Phasenstrangs Steuerimpulse, die die Einschaltdauer dieses Phasenstrangs steuern. Die Steuerimpulse für die Pulswechsel-Richterkreise der übrigen Phasenstränge werden über Schieberegisterketten oder dergleichen phasenverschoben aus der ersten Steuerimpulsfolge erzeugt und den Pulswechselrichterkreisen zugeführt.

Es ist erwünscht, die Steuerschaltung und den Tabellenspeicher in Form eines programmgesteuerten Mikroprozessors oder Mikrocontrollers zu realisieren. Die gleichzeitige Erzeugung mehrerer Steuerimpulsfolgen im Echtzeitbetrieb setzt vergleichsweise leistungsfähige Mikroprozessoren voraus, wenn in dem Tabellenspeicher Impulsbreitedaten für jede der Impulsfolgen gespeichert und annähernd parallel verarbeitet werden sollen.

Es ist Aufgabe der Erfindung, eine Mehrphasen-Wechselrichterschaltung und insbesondere eine Mehrphasen-Umrichterschaltung anzugeben, die unter Zuhilfenahme eines Mikroprozessors oder Mikrocontrollers auch dann im Echtzeitbetrieb eine parallele Erzeugung der zur Steuerung der Pulswechselrichterkreise der einzelnen Phasenstränge erforderlichen, impulsbreitegesteuerten Steuerimpulse erlaubt, wenn deren Rechengeschwindigkeit und/oder Bitstrombreite der verarbeitbaren Daten vergleichsweise klein ist.

Diese Aufgabe wird erfindungsgemäß dadurch gelöst, daß der Speicher die Impulsbreitedaten in Form von Datenwörtern speichert, die jeweils Informationen über gleichzeitig zur Steuerung der Pulswechsel-Richterkreise zu erzeugende logische Pegel der Steuerimpulse sämtlicher Phasenstränge enthalten und daß die Steuerschaltung die Datenwörter aufeinanderfolgend mit einer Wortfolgeperiode, die kleiner ist als die vorbestimmte Impulsfolgeperiode, aus dem Speicher ausliest und die Steuerimpulse entsprechend den Informationen des jeweils ausgelesenen Datenworts parallel erzeugt. Die als Mikroprozessor oder Mikrocontroller ausgebildete Steuerschaltung erzeugt an ihren Steuerimpulsausgängen innerhalb aufeinanderfolgender Wortfolgeperioden jeweils Signale, deren logischer Pegel den Informationen in dem jeweils zuletzt aus dem Speicher ausgelesenen Datenwort entsprechen. Die Steuerschaltung hält, beispielsweise mit Hilfe von ausgangsseitigen Flipflops oder dergleichen, die Pegel bis zum Auslesen des nächsten Datenworts. Die Steuerimpulspegel werden damit entsprechend den sukzessive ausgelesenen Datenwörtern im Echtzeitbetrieb gleichzeitig aktualisiert. Zur Steuerung des Auslesebetriebs sind vergleichsweise leistungsschwache Mikroprozessoren oder Mikrocontroller erforderlich.

In einer zweckmäßigen Ausgestaltung ist die Anzahl der Bitstellen jedes der Datenwörter gleich oder auch größer als die Zahl der gegeneinander phasenverschoben zu erzeugenden Folgen von Steuerimpulsen. Die logischen Pegel der Steuerimpulse der einzelnen Folgen sind hierbei durch die Informationen aus jeweils zugeordneten Bitstellen der Datenwörter festgelegt. Durch die Maßnahme entfallen Umkodierungen, und die Informationen der einzelnen Bitstellen der Datenwörter können unmittelbar den Steuerimpulsausgängen zugeführt werden.

Durch Variation der Wortfolgeperiode kann die Frequenz der Mehrphasen-Wechselspannung geändert werden. Durch Ändern der Impulsbreite proportional bei sämtlichen Impulsen der Sequenz läßt sich die Amplitude der Mehrphasen-Wechselspannung ändern. Um insbesondere die Änderung der Frequenz zu erleichtern, speichert der Speicher für jeden Steuerimpuls der Impulsbreitesequenz eine gleiche, vorbestimmte Anzahl Datenwörter. Eine Änderung der Amplitude in Verbindung mit einer Variation der Frequenz läßt sich dadurch erreichen, daß die Steuerschaltung unmittelbar vor

und unmittelbar nach der vorbestimmten Anzahl Datenwörter der Impulsbreitesequenz zusätzliche, die Folgen der Steuerimpulse bestimmende Datenwörter erzeugt. Die zusätzlich erzeugten Datenwörter ergänzen die Logikpegelinformationen jeweils vor und nach der durch die gespeicherten Datenwörter bestimmten Impulsbreitesequenz und damit den zeitlichen Abstand der Impulsgruppen voneinander. Dies entspricht einer Minderung der Grundfrequenz der erzeugten Mehrphasen-Wechselspannung. Da die von den Pulswechsel-Richterkreisen erzeugte Wechselspannung jedoch auch vom zeitlichen Mittelwert der Impulsspannungen abhängt, mindert sich zugleich die Amplitude der erzeugten Wechselspannung. Dies ist insbesondere für den Betrieb von Drehstrommotoren von Bedeutung, da mit der Abnahme der Wechselspannungsfrequenz auch die Wechselspannungsamplitude auf null abnimmt. Zweckmäßigerweise entspricht die Logikpegelinformation der zusätzlichen Datenwörter jeweils der Logikpegelinformation der unmittelbar benachbarten, gespeicherten Datenwörter der Impulsbreitesequenz, so daß innerhalb der Impulsbreitesequenz keine zusätzlichen Logikpegelübergänge auftreten, die zu Störungen bei der Steuerung der beispielsweise mit Thyristoren arbeitenden Pulswechselrichterkreise führen könnten.

Im folgenden soll die Erfindung anhand von Zeichnungen näher erläutert werden. Es zeigt:

Fig. 1a und b Zeitdiagramme zur Erläuterung eines Pulswechsel-Richterkreises;

Fig. 2 ein Blockschaltbild einer Mehrphasen-Umrichterschaltung und

Fig. 3a bis n Zeitdiagramme zur Erläuterung der Wirkungsweise der Umrichterschaltung nach Fig. 2

Pulswechsel-Richterkreise sind bekannt und sollen im folgenden nur insoweit erläutert werden, als dies zum Verständnis der Erfindung erforderlich ist. Wie Fig. 1a zeigt, erzeugt der Pulswechsel-Richterkreis aus einer Gleichspannung eine Folge von Gleichspannungsimpulsen u mit einer vorbestimmten Impulsbreite $\tau$, die sich innerhalb jeder Halbperiode der zu erzeugenden Wechselspannung U entsprechend einer vorbestimmten Impulsbreitesequenz ändert. Die Gleichspannungsimpulse u folgen mit einer Impulsfolgeperiode T aufeinander, die beispielsweise durch den Abstand der Vorderflanken oder Rückflanken oder auch durch den Mittenabstand benachbarter Gleichspannungsimpulse u festgelegt ist. Der Pulswechsel-Richterkreis umfaßt Integrationsmittel, die die Gleichspannungsimpulse zu der zumindest angenähert sinusförmigen Spannung U glätten, und er umfaßt Polaritätsänderungsschaltungen, die die Polarität der Gleichspannungsimpulse jeweils halbperiodenweise wechseln.

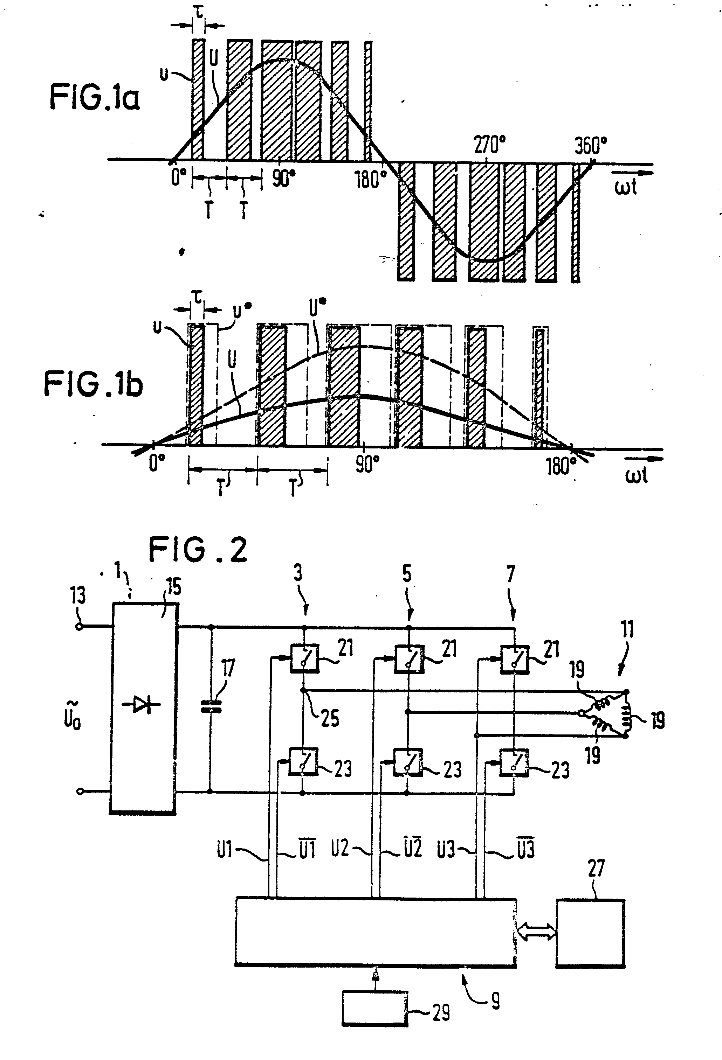

Die Impulsbreite $\tau$ der Impulsbreitensequenz ist in einem Tabellenspeicher gespeichert. Wie Fig. 1b zeigt, kann durch Ändern der Impulsfolgeperiode T der Abstand der Gleichspannungsimpulse u voneinander variiert werden, was einer Änderung der Grundfrequenz der erzeugten Wechselspannung U entspricht. Da sich mit einer Änderung der Impulsfolgeperiode T auch der zeitliche Mittelwert der Gleichspannungsimpulse ändert, ändert sich zugleich auch die Amplitude der Wechselspannung U. Dementsprechend kann durch Änderung der Impulsbreite $\tau$ ebenfalls die Amplitude der erzeugten Wechselspannung beeinflußt werden. Fig. 1b zeigt mit einer gestrichelten Linie die erzeugte Wechselspannung U', die sich bei einer Änderung der Impulsbreite der Gleichspannungsimpulse entsprechend den gestrichelt eingezeichneten Gleichspannungsimpulsen u' ergibt.

Fig. 2 zeigt eine Mehrphasen-Umrichterschaltung mit einem Gleichspannungszwischenkreis 1 und drei Pulswechselrichterkreisen 3, 5, 7, die von einer gemeinsamen, als Mikroprozessor oder Mikrocontroller ausgebildeten Steuerschaltung 9 gesteuert werden und einen Drehstromverbraucher 11, insbesondere einen Drehstrommotor, speisen. Der Gleichspannungszwischenkreis 1 ist mit seinem Eingang 13 an eine Primär-Wechselspannungsquelle angeschlossen und umfaßt einen Gleichrichterkreis 15, an dessen Ausgang ein Glättungskondensator 17 angeschlossen ist. Der Glättungskondensator 17 liefert eine Gleichspannung, die von den Pulswechsel-Richterkreisen 3, 5, 7 in Gleichspannungsimpulse umgewandelt wird, deren Impulsbreite, wie vorstehend erläutert wurde, an den Stranglasten, insbesondere den Motorwicklungen, zu einem im wesentlichen sinusförmig sich ändernden Strangwechselstrom führen.

Fig. 2 zeigt eine Mehrphasen-Umrichterschaltung. Die Schaltung kann als Mehrphasen-Wechselrichterschaltung betrieben werden, wenn ein Gleichspannungsnetz zur Verfügung steht. Der Gleichspannungszwischenkreis 1 kann dann entfallen. Es versteht sich, daß anstelle eines Gleichspannungszwischenkreises auch ein Gleichstromzwischenkreis vorgesehen sein kann, wobei dann die Pulswechselrichterkreise Gleichstromimpulse mit sich ändernder Impulsbreite erzeugen. Ein Gleichstromzwischenkreis ist insbesondere von Vorteil, wenn anstelle des in Fig. 2 in Dreieckschaltung angeschlossenen Verbrauchers 11 ein Verbraucher in Sternschaltung angeschlossen ist.

Die Pulswechselkreise 3, 5, 7 sind gleich aufgebaut und umfassen jeweils zwei in Serie zueinander geschaltete, steuerbare Schalter 21, 23. Die Serienschaltung der Schalter 21, 23 ist dem Ausgang des Gleichspannungszwischenkreises 1, hier

dem Glättungskondensator 17, parallel geschaltet. Der Verbindungspunkt 25 bildet einen der Strang phasenausgänge, an die der Verbraucher 11 angeschlossen ist Die Schalter 21, 23 werden wechselweise geschlossen und erlauben die Polaritätsumkehr der am Glättungskondensator 17 verfügbaren Gleichspannung. Die Pulswechsel-Richterkreise 5 und 7 sind analog zum vorstehend erläuterten Pulswechsel-Richterkreis 3 aufgebaut. Eine zusätzliche Erläuterung erübrigt sich deshalb.

Die Steuerschaltung 9 ist an einen Speicher, insbesondere einen Festwertspeicher 27, angeschlossen, in welchem in Tabellenform Impulsbreitedaten für die von den Pulswechsel-Richterkreisen 3, 5, 7 zu erzeugenden Gleichspannungsimpulse gespeichert sind. Der Speicher 27 enthält die Impulsbreitedaten für die Gleichspannungsimpulssequenz einer halben Periode der zu erzeugenden Mehrphasen-Wechselspannung. An einem Eingabekreis 29 der Steuerschaltung 9 kann die Frequenz der Mehrphasen-Wechselspannung und/oder deren Amplitude eingestellt werden, wobei die Steuerschaltung 9 die Impulsfolgeperiode und/oder einen Maßstabsfaktor der Impulsbreite ändert, wie dies anhand der Fig. 1a und b erläutert wurde.

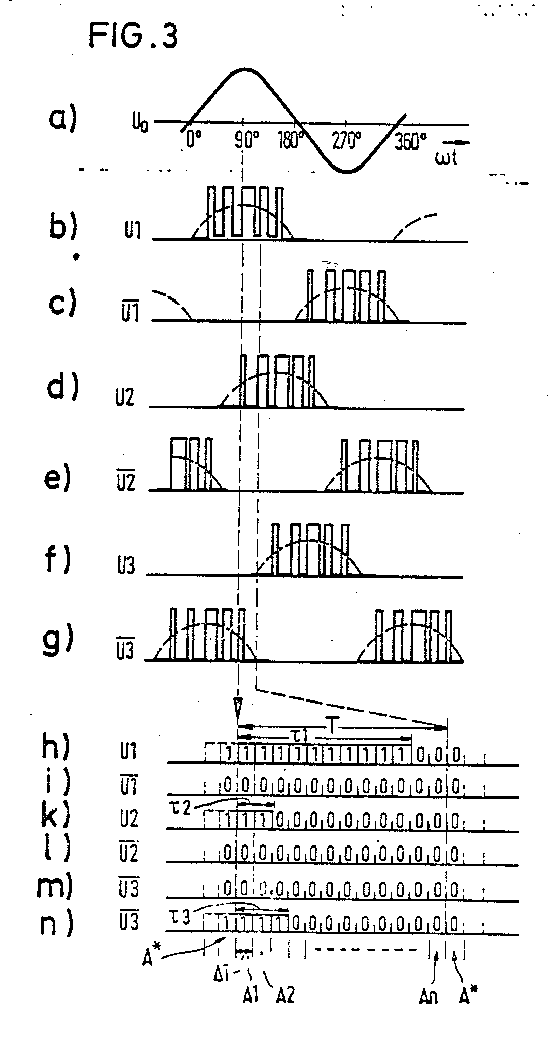

Die Steuerschaltung 9 hat gesonderte Ausgänge für jeden der Schalter 21, 23 der Pulswechselrichterkreise 3, 5 und 7 und liefert an die Steuereingänge der Steuerschalter 21, 23 Steuerimpulse, die die normalerweise geöffneten Steuerschalter für die Dauer der Steuerimpulse schließen. Die den einzelnen Steuerschaltern 21, 23 der Pulswechsel-Richterkreise 3, 5, 7 zugeführten Steuerimpulse sind in den Zeitdiagrammen der Fig. 3b bis g dargestellt. Fig. 3a zeigt eine Periode der Primär-Wechselspannung U0 am Eingang 13 des Gleichspannungszwischenkreises 1. Der Schalter 21 des Pulswechsel-Richterkreises 3 wird durch das Steuerimpulssignal U1 (Fig. 3b) gesteuert, während der Schalter 23 des Kreises 3 durch das um eine halbe Periode der zu erzeugenden Mehrphasen-Wechselspannung verschobene Steuer impulssignal $\overline{U}$1 gesteuert wird. In Fig. 3 ist die Periodendauer der Mehrphasen-Wechselspannung der Einfachheit halber gleich der Periodendauer der Primär-Wechselspannung U0 gewählt. Die Steuerimpulssignale des Pulswechsel-Richterkreises 5 sind mit U2 und $\overline{U}$2 bezeichnet und in den Fig. 3d und e dargestellt. Die Steuerimpulssignale des Pulswechsel-Richterkreises 7 sind mit U3 und $\overline{U}$3 und in den Fig. 3f und g dargestellt.

In Fig. 2 ist jedem Steuerschalter der Pulswechsel-Richterkreise ein eigener Ausgang der Steuerschaltung 9 zugeordnet. Nachdem die beiden Steuerschalter jedes Pulswechsel-Richterkreises jedoch zeitlich komplementar gesteuert werden, genügt bei geeigneter Schaltungsbemessung ein einziger Ausgang, der mit einem der Steuerschalter direkt und mit dem anderen Steuerschalter über einen Inverter verbunden ist. Die Steuerschalter sprechen dann jeweils nur auf vorbestimmte Polaritäten der Steuerimpulssignale an Diese Ausgestaltung ist von Vorteil, da die Zahl der erforderlichen Ausgänge der Steuerschaltung 9 verringert wird.

Wie Fig. 3 zeigt, werden die Steuerimpulssignale zeitlich phasenverschoben erzeugt, wobei jedoch jedes der Steuerimpulssignale dieselbe Impulsbreitensequenz hat. Die Impulsbreitensequenz wird durch die im Speicher 27 gespeicherten Impulsbreitedaten festgelegt. Der Speicher 27 speichert für jede der Impulsbreiteperioden T (Fig. 1) eine jeweils gleiche, vorbestimmte Anzahl Datenwörter, von denen jedes Datenwort mindestens soviele Bitstellen hat, wie voneinander verschiedene Steuerimpulsfolgen erzeugt werden sollen. Jede der Bitstellen des Datenworts enthält die Information für einen Momentanwert eines der Steuerimpulssignale. Die Fig. 3h bis n zeigen in einem Ausschnitt aus den Steuerimpulssignalen der Fig. 3b bis g, daß jede Steuerimpulsperiode T, innerhalb der die Impuls breite $\tau$ entsprechend den gespeicherten Impulsbreitedaten schwanken kann, in n Wortfolgeperioden $\Delta T$ unterteilt ist. In jeder der Wortfolgeperioden $\Delta T$ wird ein Datenwort A aus dem Speicher 27 ausgelesen und bestimmt für die Dauer der Wortfolgeperiode $\Delta T$ den logischen Pegel des Steuerimpulssignals U1 bis U3 bzw. $\overline{U}$1 bis $\overline{U}$3. In Fig. 3 sind der Einfachheit halber lediglich 12 Wortfolgeperioden $\Delta T$ pro Impulsfolgeperiode T dargestellt, obwohl in der Praxis die Zahl der Wortfolgeperioden $\Delta T$ beträchtlich größer aber auch kleiner sein kann. Fig. 3h zeigt daß das Steuerimpulssignal U1 während 10 Wortfolgeperioden $\Delta T$ entsprechend einer Impulsdauer $\tau$1 einen Eins-Pegel hat, der den Schalter 21 des Pulswechsel-Richterkreises 3 kontinuierlich während der Impulsbreitendauer $\tau$1 schließt. Das Steuerimpulssignal $\overline{U}$1 bleibt während der gesamten Impulsfolgeperiode T auf Null-Pegel. Entsprechendes gilt für das Steuerimpulssignal U2, welches für die Steuerimpulsdauer $\tau$2 Eins-Pegel hat und für das Steuerimpulssignal $\overline{U}$3, welches für die Impulsbreite $\tau$3 Eins-Pegel führt Das in dem Speicher 27 für die erste Wortfolgeperiode $\Delta T$ gespeicherte Datenwort A1 lautet entsprechend dem dargestellten Beispiel 101001 Die übrigen Datenworte A2 bis $A_n$ lassen sich ohne weiteres aus der Fig 3 entnehmen Der Speicher 27 speichert im vorliegenden Fall Datenwörter für die gesamte Periode der zu erzeugenden Wechselspannung Aufgrund der zeitlichen Symmetriebedingungen ist es jedoch auch möglich, Impulsbreitensequenzen für lediglich eine halbe Periode der Ausgangswechselspannung zu speichern

Jedes der Datenwörter A enthält, wie vorstehend erläutert wurde, Informationen für den logischen Pegel sämtlicher zu erzeugender Steuerimpulsfolgen, die somit parallel und gleichzeitig an den Steuerimpulsausgängen der Steuerschaltung 9 verfügbar sind.

Die Steuerschaltung 9 bestimmt die Periode des Ausgangs wechselsstroms durch Taktsignale, die mit der Wortfolgeperiode $\Delta T$ aufeinanderfolgen. Durch Ändern der Taktfrequenz kann die Frequenz des Ausgangswechselstroms variiert werden. Insbesondere bei Anwendungsfällen, bei welchen die Mehrphasen-Umrichterschaltung einen Drehstrommotor betreiben soll, ist es erwünscht, daß mit abnehmender Frequenz des Ausgangswechselstroms auch die Stromamplitude abnimmt. Um dies zu erreichen, ist vorgesehen, daß zusätzlich oder gegebenenfalls auch anstelle einer Änderung der Wortfolgeperiode $\Delta T$ vor Beginn jeder Impulsfolgeperiode T und nach Beendigung jeder Impulsfolgeperiode T zusätzliche Datenwörter A* erzeugt werden, die den Datenwörtern A1 bis $A_n$ vorangehen bzw. nachfolgen. Die zusätzlichen Datenwörter A* haben jeweils den logischen Pegel des unmittelbar benachbarten Datenworts A1 bzw. $A_n$, um keine zusätzlichen Pegelübergänge zu schaffen, die zu Fehlsteuerungen der Schalter der Pulswechsel-Richterkreise führen könnten.

Die Zahl der zusätzlichen vorangestellten bzw. nachfolgenden Datenwörter A* ändert die Impulsfolgeperiode T bezogen auf die Zeitmitte der gespeicherten Impulsfolgesequenz. Dem entspricht, wie anhand der Fig. 1b erläutert wurde, eine Abnahme der Ausgangsamplitude mit abnehmender Ausgangsfrequenz.

## Ansprüche

1. Mehrphasen-Wechselrichterschaltung zur Erzeugung mehrerer gegeneinander phasenverschobener Wechselspannungen aus einer Gleichspannung, insbesondere Mehrphasen-Umrichterschaltung, die die Gleichspannung aus einer Primär-Wechselspannung erzeugt,
mit einem durch aufeinanderfolgende Steuerimpulse vorbestimmter Dauer steuerbaren Pulswechsel-Richterkreis (3, 5, 7) für jeden Phasenstrang, mit einem Speicher (27), in welchem Impulsbreitedaten für eine vorbestimmte Impulsbreitesequenz der Steuerimpulse gespeichert sind und mit einer Steuerschaltung (9), die die Steuerimpulse (U1 - U3, $\overline{U}$ 1 - $\overline{U}$ 3) in Form gegeneinander phasenverschobener Impulsfolgen erzeugt, in welchen die Steuerimpulse mit vorbestimmter Impulsfolgeperiode aufeinanderfolgen und sich die Impulsbreite (т) entsprechend der durch die gespeicherten Impulsbreitedaten bestimmten Impulsbreitesequenz ändert und periodisch wiederholt, dadurch gekennzeichnet, daß der Speicher (27) die Impulsbreitedaten in Form von Datenwörtern (A1 - $A_n$ ) speichert, die jeweils Informationen über gleichzeitig zur Steuerung der Pulswechsel-Richterkreise (3, 5) zu erzeugende logische Pegel der Steuerimpulse sämtlicher Phasenstränge enthalten und daß die Steuerschaltung (9) die Datenwörter aufeinanderfolgend mit einer Wortfolgeperiode ($\Delta T$), die kleiner ist als die vorbestimmte Impulsfolgeperiode (T) aus dem Speicher (27) ausliest und die Steuerimpulse entsprechend den Informationen des jeweils ausgelesenen Datenworts parallel erzeugt.

2. Wechselrichterschaltung nach Anspruch 1, dadurch gekennzeichnet, daß die Anzahl der Bitstellen jedes der Datenwörter (A1 - $A_n$) gleich oder größer als die Zahl der gegeneinander phasenverschoben zu erzeugenden Folgen von Steuerimpulsen (U1 - U3, $\overline{U}$ 1 - $\overline{U}$ 3) ist und daß die logischen Pegel der Steuerimpulse der einzelnen Folgen durch die Informationen aus jeweils zugeordneten Bitstellen der Datenwörter festgelegt sind.

3. Wechselrichterschaltung nach Anspruch 1 oder 2, dadurch gekennzeichnet, daß der Speicher (27) für jeden Steuerimpuls der Impulsbreitesequenz eine gleiche, vorbestimmte Anzahl Datenwörter (A1 bis $A_n$) speichert.

4. Wechselrichterschaltung nach Anspruch 3, dadurch gekennzeichnet, daß die Steuerschaltung (9) unmittelbar vor und unmittelbar nach der vorbestimmten Anzahl Datenwörter (A1 - $A_n$) der Impulsbreitesequenz zusätzliche, die Folgen der Steuerimpulse bestimmende Datenwörter (A*) erzeugt und daß die den einzelnen Steuerimpulsfolgen zugeordneten Logikpegelinformationen der vorangehenden zusätzlichen Datenwörter gleich den Logikpegelinformationen des jeweils ersten gespeicherten Datenworts (A1) der Impulsbreitesequenz gewählt sind und die Logikpegelinformationen der nachfolgenden zusätzlichen Datenwörter gleich den Logikpegelinformationen des jeweils letzten gespeicherten Datenworts ($A_n$) der Impulsbreitesequenz gewählt sind.

0 248 449

FIG.1a

FIG.1b

FIG.2

# FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-4 587 605  (K. KOUYAMA et al.) <br> * Spalte 6, Zeile 49 - Spalte 7, Zeile 46; Figuren 13, 14 19 * | 1-4 | H 02 M   7/529 |
| X | EP-A-0 063 176  (SIEMENS) <br> * Seite 2, Zeile 33  -  Seite  4, letzte Zeile * | 1-4 | |
| X | US-A-4 447 786  (D.A. SAAR et al.) <br> * Spalte  5, Zeile 7 - Spalte 8, Zeile 7 * | 1-3 | |
| A | DE-A-2 829 793  (SIEMENS) <br> * Seite 7, Zeile 15 -  Seite  12, Zeile  12;  Seite 15, Zeile 8 und folgende * | 1 | |
| A | DE-A-2 645 476  (H. EICHHÖFER) <br> * Seite 11, Absatz 2 - Seite  15, Absatz 2 * | 1 | RECHERCHIERTE SACHGEBIETE (Int. Cl. 4) <br><br> H 02 M    1/00 <br> H 02 M    7/00 <br> H 02 P    7/00 |

---                            -/-

Der vorliegende Recherchenbericht wurde für alle Patentansprüche erstellt

| Recherchenort <br> BERLIN | Abschlußdatum der Recherche <br> 31-07-1987 | Prüfer <br> GESSNER E A F |
|---|---|---|

BAD ORIGINAL

Europäisches
Patentamt

**EUROPÄISCHER RECHERCHENBERICHT**

Nummer der Anmeldung

EP 87 10 8203

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | IEEE TRANSACTIONS ON INDUSTRY APPLICATIONS, Band IA-19, Nr. 3, Teil 1, Mai-Juni 1983, Seiten 409-414; A. POLLMANN "A digital pulsewidth modulator employing advanced modulation techniques" * Seite 411, linke Spalte, Absatz 2 und Fortsetzung, rechte Spalte * ----- | 1 | |

RECHERCHIERTE
SACHGEBIETE (Int Cl 4)

Der vorliegende Recherchenbericht wurde für alle Patentansprüche erstellt

| Recherchenort | Abschlußdatum der Recherche | Prüfer |
|---|---|---|
| BERLIN | 31-07-1987 | GESSNER E A F |